# FASCICULE DE BREVET EUROPEEN

(11) **EP 2 251 734 B1**
(45) Date de publication et mention de la délivrance du brevet: **15.10.2014**
(21) Numéro de dépôt: 10162607.5
(22) Date de dépôt: 11.05.2010
(51) Int. Cl.: G02C 13/00

(54) **Procédé et système de sélection en ligne d'une monture de lunettes virtuelle**
Verfahren und System zur Online-Auswahl einer virtuellen Brillenfassung
Method and system for on-line selection of a virtual glasses frame

(30) Priorité: 11.05.2009 FR 0902254
(43) Date de publication de la demande: 17.11.2010
(73) Titulaire: ACEP FRANCE, 75008 Paris (FR)
(72) Inventeur: Sayag, Jean-Philippe, 75008 Paris (FR)
(74) Mandataire: Gendron, Vincent Christian

(56) Documents cités:
- EP-A- 0 680 722
- WO-A-01/32074
- DE-A1- 10 007 705
- DE-A1- 10 216 824
- FR-A- 2 885 231
- US-A- 6 095 650
- US-A1- 2003 090 625
- US-A1- 2008 074 440
- US-B1- 6 535 223

## Description

La présente invention se rapporte à un procédé et à un système de sélection en ligne d'une monture de lunettes virtuelle.

Des systèmes connus permettent déjà de choisir des paires de lunettes et, en particulier, des montures de lunettes, à l'aide de services dits en ligne, se présentant par exemple sous la forme d'applications client-serveur, accessibles par l'intermédiaire d'un réseau de communication tel qu'Internet.

Ces services en ligne proposent un environnement intégré de simulation à partir duquel il est possible de chausser virtuellement différentes montures de lunettes sur un visage de démonstration ou sur son propre visage en représentation virtuelle, par exemple sur un écran d'ordinateur sur lequel s'exécute l'application. US 2003/0090625 propose un tel environnement.

Certains de ces services permettent en outre de simuler le prix de la paire de lunettes à partir d'une monture virtuelle ainsi sélectionnée, en proposant au patient de renseigner des paramètres de correction pour le choix de verres correcteurs adaptés à sa vue.

Cependant, ces services en ligne sont surtout proposés au patient à titre indicatif, pour l'aider à orienter sa sélection de lunettes, essentiellement en fonction de critères esthétiques et de prix, mais ne l'exonèrent pas pour autant de se rendre ensuite physiquement chez un opticien pour pouvoir valider le choix de la monture et déterminer ses paramètres ophtalmiques, permettant de lui fabriquer des verres correcteurs adaptés à la monture sélectionnée.

En effet, afin d'obtenir le confort maximal du patient chaussé de la monture équipée de ces verres correcteurs, il convient notamment que le centre optique des yeux et le centre optique des verres correcteurs correspondant coïncident parfaitement. Ainsi, il est essentiel de connaître notamment la distance qui s'étend entre les pupilles des yeux du patient et ladite monture. La détermination le plus précisément possible de ces paramètres ophtalmiques du patient permettant le centrage des verres correcteurs par rapport aux yeux du patient nécessite évidemment que la monture dans laquelle doivent être enchâssés les verres correcteurs soit précisément ajustée sur le visage du patient.

Or, l'environnement de simulation précité ne permet pas d'ajuster avec précision la monture virtuelle sur le visage du patient en représentation virtuelle.

C'est pourquoi la sélection virtuelle d'une monture de lunettes nécessitant des verres correcteurs doit nécessairement faire l'objet par la suite d'une confirmation et d'un contrôle par un opticien professionnel, afin que ce dernier puisse ajuster précisément la monture réelle correspondante sur le visage du patient, dans le but d'effectuer les mesures permettant de déterminer les différents paramètres de réglage et de positionnement des verres correcteurs sur la monture sélectionnée, et ainsi fabriquer des verres correcteurs adaptés au patient en fonction de la monture sélectionnée.

Actuellement, bien qu'ils puissent permettre à un patient de sélectionner à distance une monture de lunettes sur des critères essentiellement esthétiques, les services en ligne précités ne permettent donc pas de valider cette sélection et de commander directement à distance une paire de lunettes comprenant la monture sélectionnée dans laquelle des verres correcteurs adaptés au patient sont enchâssés. La difficulté pour ce faire réside notamment dans le fait que le positionnement, notamment vertical, de la monture virtuelle sélectionnée sur le visage en représentation virtuelle est largement incertain, empêchant ainsi la détermination précise des paramètres ophtalmiques du patient à même de permettre de lui confectionner des verres correcteurs adaptés à la morphologie de son visage, en fonction de la monture sélectionnée.

Aussi, un problème qui se pose et que vise à résoudre la présente invention, est de fournir un procédé de sélection en ligne d'une monture virtuelle qui permette notamment d'ajuster précisément la monture virtuelle sélectionnée sur un visage en représentation virtuelle.

Dans le but de résoudre ce problème, la présente invention propose un procédé de sélection en ligne d'une monture de lunettes virtuelle parmi une pluralité de montures virtuelles selon la revendication 1, du type selon lequel la monture virtuelle est une image destinée à être superposée à une première image d'un visage, lesdites images étant enregistrées à une même échelle pour être affichées simultanément sur un écran de sorte à obtenir une représentation dudit visage chaussant la monture virtuelle, ledit procédé étant **caractérisé en ce qu**'on enregistre à ladite échelle une seconde image dudit visage chaussé d'une monture étalon, on détermine par traitement de ladite seconde image visualisée à ladite échelle un repère d'étalonnage de la position verticale de ladite monture étalon sur ledit visage, et en ce que ladite image de monture virtuelle est superposée à ladite première image dudit visage selon ledit repère d'étalonnage, de sorte que les positions verticales relatives de ladite monture virtuelle et dudit visage, d'une part et de ladite monture étalon et dudit visage, d'autre part, correspondent précisément.

Grâce au procédé objet de la présente invention, la simulation de l'essai d'une monture virtuelle sur le visage du patient en représentation virtuelle est avantageusement réalisée en s'assurant de retrouver la position précise d'une monture étalon chaussant réellement le visage du patient. Le résultat de cette simulation reproduit donc aussi fidèlement que possible, en ce qui concerne les positions verticales relatives de la monture virtuelle et du visage du patient, le résultat qui aurait été obtenu si le patient avait réellement chaussé la monture réelle correspondante.

Le traitement de ladite seconde image visualisée consiste à tracer une ligne horizontale passant sensiblement par le centre des yeux dudit visage, reporter de manière horizontale dans le plan de ladite seconde image un élément de référence de longueur prédéfinie visualisé à ladite échelle, entre deux parties de ladite monture étalon embrassant le nez dudit visage séparées par ladite longueur prédéfinie, et mesurer dans le plan de ladite seconde image la distance qui sépare ladite ligne horizontale et ledit élément de référence de longueur prédéfinie, ladite distance mesurée constituant ledit repère d'étalonnage.

De préférence, ladite ligne horizontale passe par chacun des reflets cornéens des yeux du visage préalablement détectés.

Ladite image de monture virtuelle enregistrée est traitée de façon à reporter horizontalement dans le plan de ladite image de monture virtuelle ledit élément de référence de longueur prédéfinie à l'endroit correspondant de ladite monture virtuelle où deux parties opposées de ladite monture virtuelle prévues pour embrasser le nez dudit visage sont séparées par ladite longueur prédéfinie, la superposition de ladite image de monture virtuelle et de ladite première image dudit visage étant ajustée de sorte à ce que la distance entre ladite ligne horizontale correspondante pour ladite première image dudit visage et ledit élément de référence reporté sur ladite image de monture virtuelle corresponde à celle fournie par le repère d'étalonnage.

De préférence, ledit élément de référence de longueur prédéfinie est adapté à modéliser un pont longitudinal de longueur choisie parmi des longueurs de 16 mm, 18 mm ou 20 mm.

Avantageusement, les images de montures virtuelles enregistrées sont classées en fonction de la longueur dudit pont longitudinal.

Avantageusement, ladite monture étalon chaussant ledit visage est pourvue d'un moyen de calibration permettant d'établir, à partir de ladite seconde image, une échelle de référence pour effectuer des mesures.

Des paramètres ophtalmiques dudit visage nécessaires au positionnement de verres correcteurs correspondants sur ladite monture virtuelle sélectionnée, peuvent être mesurés à partir de ladite échelle de référence.

L'invention concerne également un système de sélection de montures de lunettes virtuelles selon la revendication 8, comprenant des moyens d'acquisition d'images adaptés à fournir une première image d'un visage et une seconde image dudit visage chaussé d'une monture étalon, des premiers moyens de traitement reliés auxdits moyens d'acquisition d'images, adaptés à formater lesdites images fournies à une même échelle, lesdits premiers moyens de traitement étant en outre adaptés à déterminer, à partir de ladite seconde image formatée, un repère d'étalonnage de la position verticale de ladite monture étalon sur ledit visage, ledit système comprenant des premiers moyens de stockage adaptés à stocker ladite première image formatée et des informations relatives audit visage comprenant au moins ledit repère d'étalonnage, des seconds moyens de stockage adaptés à stocker une pluralité d'images de monture de lunettes virtuelle à ladite échelle, et des seconds moyens de traitement adaptés à positionner virtuellement sur ledit visage une monture virtuelle sélectionnée, en superposant l'image de monture virtuelle sélectionnée à ladite première image dudit visage selon ledit repère d'étalonnage, de sorte que les positions verticales relatives de ladite monture virtuelle et dudit visage, d'une part et de ladite monture étalon et dudit visage, d'autre part, correspondent précisément.

Lesdits premiers moyens de traitement sont adaptés à définir une ligne horizontale passant sensiblement par le centre des yeux dudit visage, à reporter de manière horizontale dans le plan de ladite seconde image un élément de référence de longueur prédéfinie visualisée à ladite échelle entre deux partie de ladite monture étalon embrassant le nez dudit visage séparée par ladite longueur prédéfinie et à mesurer dans le plan de ladite seconde image la distance qui sépare ladite ligne horizontale dudit élément de référence reporté horizontalement, ladite distance mesurée constituant ledit repère d'étalonnage.

De préférence, le système selon l'invention comprend des moyens de détermination des reflets cornéens des deux yeux dudit visage et lesdits premiers moyens de traitement sont alors adaptés à tracer ladite ligne horizontale passant par chacun desdits reflets cornéens.

La pluralité d'images de monture de lunettes virtuelle est stockée dans lesdits seconds moyens de stockage en reportant horizontalement dans le plan de chaque image de monture virtuelle stockée ledit élément de référence de longueur prédéfinie à l'endroit correspondant de ladite monture virtuelle où deux parties opposées de ladite monture virtuelle prévues pour embrasser le nez dudit visage sont séparées par ladite longueur prédéfinie, lesdits seconds moyens de traitement étant adaptés à définir une ligne horizontale sur ladite première image dudit visage correspondant à celle définie par lesdits premiers moyens de traitement et à superposer ladite image de monture virtuelle sélectionnée à ladite première image dudit visage de sorte que la distance entre ladite ligne horizontale définie sur ladite première image dudit visage et ledit élément de référence reporté sur ladite image monture virtuelle corresponde à la distance fournie par ledit repère d'étalonnage.

Avantageusement, ladite monture étalon chaussant ledit visage est équipée d'un moyen de calibration, lesdits premiers moyens de traitement étant en outre adaptés, à partir de ladite seconde image dudit visage chaussant ladite monture étalon équipée dudit moyen de calibration, à établir une échelle de référence et à mesurer, en utilisant ladite échelle de référence, des paramètres ophtalmiques dudit visage nécessaires au positionnement de verres correcteurs correspondants sur ladite monture virtuelle sélectionnée, lesdits premiers moyens de stockage étant en outre adaptés à stocker parmi les informations relatives audit visage, lesdits paramètres ophtalmiques mesurés.

De préférence, lesdits premier et second moyens de stockage et lesdits seconds moyens de traitement sont déportés dans un serveur.

Le système selon l'invention peut alors comprendre un terminal d'affichage relié audit serveur par l'intermédiaire d'un réseau de communication, ledit terminal d'affichage étant adapté à afficher une représentation dudit visage chaussant ladite monture virtuelle sélectionnée.

D'autres particularités et avantages de l'invention ressortiront à la lecture de la description faite ci-après d'un mode de réalisation particulier de l'invention, donné à titre indicatif mais non nécessairement limitatif, en référence aux dessins annexés sur lesquels :
- la Figure 1 est un schéma synoptique illustrant un système de sélection de montures virtuelles selon l'invention;
- la Figure 2 est une vue schématique partielle d'une image d'un visage d'un patient vu de face et chaussant une monture dite étalon aux fins de l'invention.

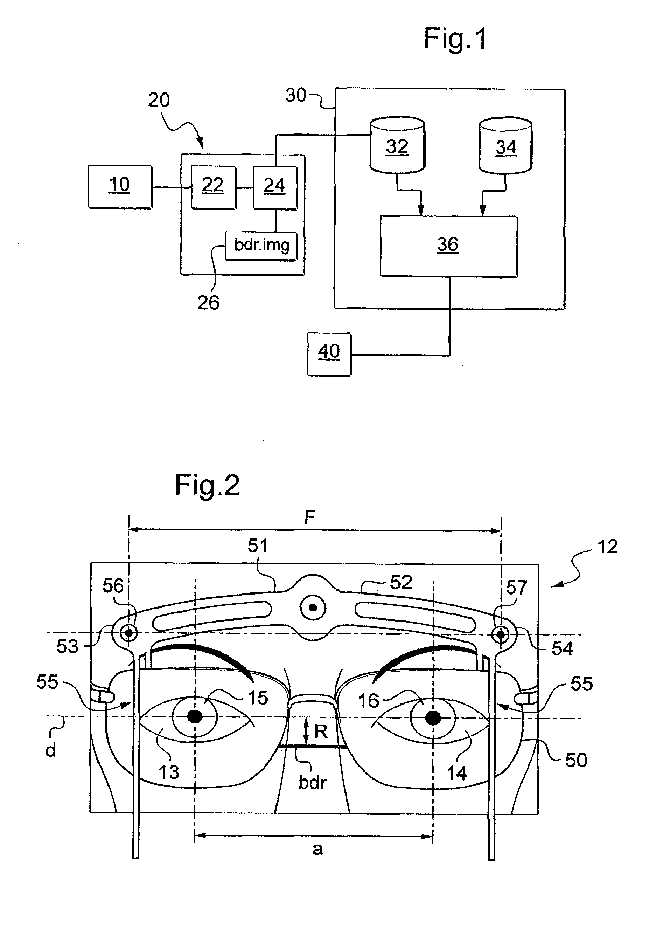

La Figure 1 illustre un système de sélection en ligne d'une monture de lunettes virtuelle. Le système conforme à l'invention comprend un premier ensemble destiné notamment à déterminer un repère d'étalonnage de la position verticale d'une monture de lunette sur le visage d'un patient, auquel le système pourra avantageusement se référer par la suite pour positionner correctement une monture virtuelle sur le visage du patient en représentation virtuelle, comme il sera expliqué plus en détail par la suite.

Ce premier ensemble comprend des moyens d'acquisition d'image 10, comportant par exemple une caméra numérique de type CCD, auxquels sont reliés des moyens de traitement 20. Les moyens de traitement 20 sont des moyens logiciels prévus pour s'exécuter par exemple dans un micro-ordinateur muni d'une interface de visualisation et d'une interface de saisie non représentées. Ils sont adaptés à traiter les images numériques fournis par les moyens d'acquisition d'images et sont destinés à assurer des étapes de transformation d'images et en particulier de formatage à une même échelle des images fournies, ainsi que la partie de calcul permettant notamment de déterminer le repère d'étalonnage précité.

Pour ce faire, une première opération d'acquisition d'image est nécessaire ayant pour but d'étalonner le système, en lui fournissant une image du patient chaussant une monture de lunettes dite étalon, qui peut être par exemple sa propre monture ou une lunette essayée en magasin et, en tous les cas, qui est réputée être ajustée correctement sur son visage.

Cette première opération d'étalonnage nécessitant d'acquisition de l'image du visage du patient chaussant la monture étalon est réalisée de préférence chez le prestataire du service de sélection en ligne de montures virtuelles, qui peut être par exemple un magasin d'optique.

Comme illustré à la figure 2 montrant une telle image 12, on peut observer que le patient est équipé de la monture étalon 50, laquelle est alors ajustée correctement sur son visage. Lors de la prise de vue, la monture étalon 50 est avantageusement équipé d'un moyen de calibration 51, se présentant sous la forme d'une portion centrale 52 s'étendant longitudinalement entre deux extrémités opposés 53, 54, lesquelles comportent respectivement une extrémité de fixation, prévue pour venir se clipser sur la monture. Le moyen de calibration 51, qui est ainsi totalement solidaire de la monture 50, présente deux repères de calibration opposés 56, 57 installés respectivement aux deux extrémités opposées 53, 54 et aisément repérables sur l'image par les moyens de traitement. Il s'agit par exemple d'une marque de couleur blanche sous la forme d'un disque au centre duquel est porté un point noir. Ces deux points noirs des repères de calibration 56, 57 sont en outre espacés d'une distance F connue, par exemple égale à exactement 110 mm. Cette distance F entre les repères de calibration est un repère connu des moyens de traitement 20, destiné à permettre à ces derniers de déterminer une échelle de mesure, permettant notamment d'acquérir des paramètres ophtalmiques du patient, en prenant en compte un facteur de conversion issu du rapport du nombre de pixels compté entre les deux points noirs des repères de calibration et de la distance F connue. De cette manière, les moyens de traitement seront à même de transformer les pixels comptés au cours de différentes étapes de traitement en longueurs réelles, par exemple en millimètres.

Les moyens de traitement 20 comportent des moyens d'enregistrement 22 destinés à enregistrer numériquement l'image précitée du visage du patient chaussé de la monture étalon 50 équipée du moyen de calibration 51, fournie par les moyens d'acquisition d'images 10, en la réduisant par rapport à la taille originale, de manière à ce que l'échelle soit par exemple de 1 mm pour 1,5 pixels. En outre, les moyens de traitement 20 incluent un module de calcul 24, permettant d'effectuer un certain nombre de calculs sur l'image ainsi acquise.

Notamment, ces calculs visent dans un premier temps à déterminer différents paramètres ophtalmiques du patient, nécessaires au positionnement de verres correcteurs correspondants sur une monture sélectionnée par la suite, et qui comprennent au moins l'écart interpupillaire a.

Pour ce faire, on observera sur la figure 2, la représentation des pupilles 15, 16 des yeux 13, 14, du patient, lesquelles pupilles 15, 16, sont aptes à présenter en leur centre une marque blanchâtre correspondant au reflet de la lumière, naturelle ou artificielle, au sommet de la cornée, appelée reflet cornéen. Lorsque l'espace dans lequel se situe l'installation comprenant les moyens d'acquisition d'image est sombre, une lumière artificielle sera avantageusement fournie pour accentuer le reflet cornéen précité sur le sommet de la cornée. Ce reflet cornéen est aisément repérable par les moyens de traitement d'image et correspond sensiblement à un point appartenant à la droite d correspondant à l'axe optique de l'oeil.

Ainsi, le module de calcul 24 des moyens de traitement 20, en comptabilisant en nombre de pixels, la distance qui sépare les deux points blancs de l'image correspondant aux reflets cornéens et en prenant en compte l'échelle de mesure prédéfinie, est en mesure de calculer la distance a constituant l'écart interpupillaire.

D'autres paramètres ophtalmiques nécessaires au positionnement de verres correcteurs sur une monture pourront également être calculés lors de cette phase d'étalonnage du système, notamment les écarts pupillaires droite et gauche, qui séparent les reflets cornéens de l'oeil droite et de l'oeil gauche respectivement du centre de la monture étalon.

La détermination de ces paramètres ophtalmiques par les moyens de traitement telle qu'elle vient d'être décrite est une opération connue en soi. On pourra utilement se reporter à la demande de brevet FR 0112156 pour plus de détails.

Ces paramètres ainsi déterminés, qui doivent être pris en compte pour réaliser les verres correcteurs et pour les positionner correctement dans leur monture, sont stockés dans des premiers moyens de stockage 32 sur un serveur 30, du type serveur Web, hébergeant le service en ligne de sélection de montures virtuelles.

Par ailleurs, selon la présente invention, le module de calcul des moyens de traitement selon l'invention est adapté à déterminer un repère d'étalonnage de la position verticale de la monture étalon sur le visage du patient.

Pour ce faire, le module de traitement d'image 24 coopère avec des moyens d'enregistrement 26 destinés à enregistrer numériquement une image bdr.img d'un élément de référence de longueur prédéfinie, référencée bdr sur la figure 2. Cette image est enregistrée à la même échelle que l'image 12 du visage du patient chaussant la monture étalon. L'élément de référence bdr est défini par une ligne horizontale dont la longueur correspond à une taille standard de pont longitudinal selon différents types de morphologie de visage, par exemple 18 mm, 20 mm ou 22 mm, permettant ainsi de symboliser l'écart entre les parties de la monture censées embrasser le nez d'un visage selon la morphologie de visage retenue.

Le module de traitement d'images est alors adapté à reporter de manière horizontale dans le plan de l'image 12 l'élément de référence de longueur prédéfinie bdr visualisé à la même échelle, entre les deux parties de la monture étalon 50 chaussant le nez du visage qui sont séparées sensiblement par la longueur prédéfinie, par exemple 18 mm. Le module de traitement est également adapté à tracer sur l'image 12 la ligne d passant par les centres optiques des deux yeux, par exemple par repérage des reflets cornéens comme expliqué plus haut, la ligne d étant alors tracée en passant par ces reflets cornéens. Le module de calcul mesure ensuite dans le plan de l'image 12, par exemple par comptage de pixels, la distance R qui sépare l'élément de référence de longueur prédéfinie et cette ligne d selon une direction perpendiculaire, permettant ainsi de connaître l'emplacement du visage ou repose le pont de la monture étalon 50. Cette position est donc donnée en valeur relative par rapport aux reflets cornéens. La distance R ainsi mesurée par les moyens de traitement est stockée dans les premiers moyens de stockage 32 du serveur 30, parmi les autres informations stockées relatives au visage de ce patient comprenant notamment ses paramètres ophtalmiques comme expliqué plus haut.

La mesure de cette distance R constitue alors le repère d'étalonnage de position verticale de la monture étalon 50 sur le visage du patient, qui servira par la suite à positionner virtuellement le pont correspondant d'une monture virtuelle sélectionnée sur le visage du patient en représentation virtuelle à un emplacement approprié de celui-ci, correspondant exactement à celui de la monture étalon.

A cet effet, on acquiert également, par exemple lors de l'acquisition de l'image 12 servant pour étalonner le système, une image du visage du patient vierge de toute monture. Cette image est enregistrée numériquement par les moyens d'enregistrement des moyens de traitement à la même échelle prédéfinie, par exemple 1 mm pour 1,5 pixel.

Cette image du visage du patient sans monture est également stockée dans les premiers moyens de stockage 32 du serveur 30, afin d'être utilisée dans le cadre du service de sélection en ligne d'une monture virtuelle.

Pour ce faire, le serveur 30 héberge également une seconde base de données 34 destinée à stocker une bibliothèque numérique d'images de montures virtuelles enregistrées à la même échelle que celle utilisée pour enregistrer les images des visages avec monture étalon et sans monture. Ces images de montures de lunettes virtuelles pourront avantageusement être classées en fonction de la taille de leur pont : 18, 20 ou 22 par exemple. Elles pourront également être classées en fonction d'une forme de visage à laquelle elles sont destinées pour faciliter la sélection par le patient.

Ainsi, un patient, dès lors que les informations relatives à son visage, obtenues lors de la phase d'étalonnage du système et comprenant notamment la distance R, et qu'une image de son visage vierge de toute monture sont stockées dans le système au niveau du serveur 30, pourra utiliser à tout moment le service de sélection en ligne de montures virtuelles hébergée sur le serveur 30, lui permettant de chausser virtuellement sur son visage en représentation virtuelle une monture virtuelle sélectionnée dans la bibliothèque numérique.

Pour ce faire, le patient dispose d'un terminal d'affichage 40 équipé par exemple d'un navigateur Web lui permettant d'accéder au serveur 30 par l'intermédiaire du réseau Internet.

Le serveur 30 comprend des moyens de traitement 36, adaptés à générer une image à partir de l'image du visage du patient sans monture stockée dans les premiers moyens de stockage 32 et d'une image de monture virtuelle stockée dans les seconds moyens de stockage 32 sélectionnée par le patient par l'intermédiaire de son navigateur. Cette image générée par les moyens de traitement 36 du serveur est plus précisément constituée par une superposition des images respectives du visage du patient sans monture et de la monture virtuelle, laquelle superposition d'images est ensuite servie au navigateur du terminal 40 pour être affichée sur l'écran d'affichage, afin de fournir une représentation virtuelle du visage du patient chaussant la monture virtuelle.

Selon l'invention, les moyens de traitement 36 du serveur 30 sont adaptés à positionner virtuellement sur le visage du patient la monture virtuelle sélectionnée, en superposant l'image de monture virtuelle sélectionnée à l'image du visage selon la distance R précédemment mesurée pour ce patient lors de la phase d'étalonnage et stockée dans les premiers moyens de stockage 32 parmi les informations relatives au patient. De cette façon, les positions verticales relatives de la monture virtuelle sélectionnée et du visage, d'une part et de la monture étalon et dudit visage, d'autre part, correspondent précisément.

Pour ce faire, les images de montures virtuelles sont enregistrées en reportant horizontalement dans le plan de chaque image de monture virtuelle l'élément de référence de longueur prédéfinie bdr à l'endroit correspondant de chaque monture virtuelle où les deux parties opposées de la monture virtuelle prévues pour embrasser le nez du visage sont séparées par ladite longueur prédéfinie, définissant ainsi fictivement pour chaque monture virtuelle, l'emplacement du pont longitudinal virtuel de taille prédéfinie parmi 18, 20 ou 22 mm par exemple.

En outre, les reflets cornéens sont également disponibles sur l'image du visage sans monture, de sorte que les moyens de traitement 36 sont adaptés à définir sur cette image la ligne d passant par ces reflets cornéens, correspondant à la ligne d tracée sur l'image du visage du patient chaussant la monture étalon.

L'emplacement du visage où doit reposer le pont de la monture virtuelle, défini fictivement par l'élément de référence de longueur prédéfinie bdr reporté sur l'image de la monture virtuelle, est connu du repère d'étalonnage R préalablement stocké, fournissant cet emplacement en valeur relative par rapport à la ligne d passant par les reflets cornéens. Ainsi, les moyens de traitement 36 sont adaptés à ajuster la superposition de l'image de monture virtuelle sélectionnée et de l'image du visage du patient, par comptage du nombre de pixels, selon une direction perpendiculaire, entre la ligne d passant par les reflets cornéens définie sur l'image du visage du patient et l'élément de référence de longueur prédéfinie bdr reporté sur l'image de la monture virtuelle sélectionnée, de sorte à ce que ce nombre de pixels correspondent à celui fourni par le repère d'étalonnage R.

Ainsi positionné relativement l'une par rapport à l'autre selon le repère d'étalonnage R, lesdites images forment une représentation virtuelle du visage du patient chaussant la monture virtuelle sélectionnée, permettant de simuler l'ajustement de la monture virtuelle sur le visage du patient, comme s'il l'avait essayée réellement.

Cette représentation virtuelle peut alors être avantageusement prise en compte, en plus des paramètres ophtalmiques acquis lors de la phase d'étalonnage, pour réaliser des verres correcteurs et pour les positionner correctement dans la monture ainsi sélectionnée, sans qu'il soit nécessaire que le patient se rende physiquement dans un magasin d'optique pour essayer réellement ladite monture.

Le système et le procédé objet de l'invention permettent ainsi avantageusement de mettre en place pour la première fois, via un site Web, un service de commercialisation à distance de paires de lunettes avec verres correcteurs. Ce service permet non seulement de sélectionner une monture, mais également de commander à distance cette monture avec des verres correcteurs correspondants adaptés au patient, ces derniers pouvant en effet être réalisés et positionnés correctement sur la monture sélectionnée sans passage ultérieur du patient au magasin d'optique, grâce aux propriétés de la représentation virtuelle selon l'invention de la monture sélectionnée chaussant le visage du patient.

## Revendications

1. Procédé de sélection en ligne d'une monture de lunettes virtuelle parmi une pluralité de montures virtuelles, du type selon lequel on génère une image formant une représentation virtuelle d'un visage chaussant une monture virtuelle sélectionnée, ladite image étant constituée par une superposition d'une image de monture virtuelle et d'une première image d'un visage sans monture enregistrées à une même échelle pour être affichées simultanément sur un écran de sorte à obtenir ladite représentation dudit visage chaussant la monture virtuelle, ledit procédé étant **caractérisé en ce qu'**on enregistre à ladite échelle une seconde image (12) dudit visage chaussé d'une monture étalon (50), on détermine par traitement de ladite seconde image visualisée à ladite échelle un repère d'étalonnage (R) de la position verticale de ladite monture étalon (50) sur ledit visage, et on ajuste la position de ladite image de monture virtuelle relativement à ladite première image dudit visage en fonction dudit repère d'étalonnage (R) déterminé à partir de ladite seconde image dudit visage, le traitement de ladite seconde image (12) dudit visage chaussé de ladite monture étalon consistant à :
- tracer une première ligne horizontale (d) passant sensiblement par le centre des yeux (13, 14) dudit visage,
- reporter dans le plan de ladite seconde image une image visualisée à ladite échelle d'une seconde ligne horizontale de longueur prédéfinie (bdr) correspondant à une longueur de pont standard, positionnée de sorte que ladite seconde ligne horizontale (bdr) relie entre elles deux parties opposées de ladite monture étalon (50) embrassant le nez dudit visage et séparées par ladite longueur prédéfinie,
- mesurer dans le plan de ladite seconde image la distance qui sépare verticalement ladite première ligne horizontale et ladite seconde ligne horizontale, ladite distance mesurée constituant ledit repère d'étalonnage (R) de la position verticale de ladite monture étalon sur le visage.

2. Procédé selon la revendication 1, **caractérisé en ce qu'**il consiste à détecter des reflets cornéens des deux yeux dudit visage et **en ce que** ladite première ligne horizontale (d) passe par chacun desdits reflets cornéens.

3. Procédé selon l'une quelconque des revendications 1 ou 2, **caractérisé en ce qu'**:
on enregistre ladite image de monture virtuelle en reportant dans le plan de ladite image de monture virtuelle ladite image de ladite seconde ligne horizontale de longueur prédéfinie (bdr), positionnée de sorte que ladite seconde ligne horizontale (bdr) relie entre elles deux parties opposées de ladite monture virtuelle prévues pour embrasser le nez dudit visage et séparées par ladite longueur prédéfinie,
on reporte sur ladite première image dudit visage sans monture ladite première ligne horizontale (d) passant sensiblement par le centre des yeux dudit visage sur ladite première image,
on superpose ladite image de monture virtuelle et ladite première image dudit visage de sorte à ce que la distance qui sépare verticalement ladite première ligne horizontale (d) reportée sur ladite première image dudit visage et ladite seconde ligne horizontale reportée sur ladite image de monture virtuelle corresponde audit repère d'étalonnage (R) de la position verticale de ladite monture étalon sur ledit visage mesuré sur ladite seconde image.

4. Procédé selon l'une quelconque des revendications 1 à 3, **caractérisé en ce que** ladite seconde ligne horizontale (bdr) est adaptée à modéliser un pont longitudinal de longueur choisie parmi des longueurs de 16 mm, 18 mm ou 20 mm.

5. Procédé selon la revendication 4, **caractérisé en ce que** les images de montures virtuelles enregistrées sont classées en fonction de la longueur dudit pont longitudinal.

6. Procédé selon l'une quelconque des revendications précédentes, **caractérisé en ce qu'**on équipe ladite monture étalon (50) chaussant ledit visage d'un moyen de calibration (51) permettant d'établir, à partir de ladite seconde image (12), une échelle de référence pour effectuer des mesures.

7. Procédé selon la revendication 6, **caractérisé en ce qu'**on mesure à partir de ladite échelle de référence des paramètres ophtalmiques dudit visage nécessaires au positionnement de verres correcteurs correspondants sur ladite monture virtuelle sélectionnée.

8. Système de sélection de montures de lunettes virtuelles, comprenant :
- des moyens d'acquisition d'images (10) adaptés à fournir une première image d'un visage sans monture et une seconde image (12) dudit visage chaussé d'une monture étalon (50),
- des premiers moyens de traitement (20) reliés auxdits moyens d'acquisition d'images (10), adaptés à formater lesdites images fournies à une même échelle, lesdits premiers moyens de traitement (20) étant en outre adaptés à déterminer, à partir de ladite seconde image formatée, un repère d'étalonnage (R) de la position verticale de ladite monture étalon sur ledit visage,
- des premiers moyens de stockage (32) adaptés à stocker ladite première image dudit visage formatée et des informations relatives audit visage comprenant au moins ledit repère d'étalonnage (R),
- des seconds moyens de stockage (34) adaptés à stocker une pluralité d'images de monture de lunettes virtuelle à ladite échelle, et
- des seconds moyens de traitement (36) adaptés à superposer une image de monture virtuelle sélectionnée à partir desdits seconds moyens de stockage (34) à ladite première image dudit visage en ajustant la position de ladite image de monture virtuelle sélectionnée relativement à ladite première image dudit visage en fonction dudit repère d'étalonnage (R) déterminé à partir de ladite seconde image dudit visage,
lesdits premiers moyens de traitement (20) étant adaptés à définir une première ligne horizontale (d) passant sensiblement par le centre des yeux (13, 14) dudit visage, à reporter dans le plan de ladite seconde image une image visualisée à ladite échelle d'une seconde ligne horizontale de longueur prédéfinie (bdr) correspondant à une longueur de pont standard, positionnée de sorte que ladite seconde ligne horizontale (bdr) relie entre elles deux partie opposées de ladite monture étalon (50) embrassant le nez dudit visage et séparées par ladite longueur prédéfinie et à mesurer dans le plan de ladite seconde image la distance qui sépare verticalement ladite première ligne horizontale et ladite seconde ligne horizontale, ladite distance mesurée constituant ledit repère d'étalonnage (R) de la position verticale de ladite monture étalon sur le visage.

9. Système selon la revendication 8, **caractérisé en ce qu'**il comprend des moyens de détermination des reflets cornéens des deux yeux dudit visage et **en ce que** lesdits premiers moyens de traitement (20) sont adaptés à tracer ladite première ligne horizontale (d) passant par chacun desdits reflets cornéens.

10. Système selon la revendication 8 ou 9, **caractérisé en ce que** lesdits seconds moyens de stockage (34) sont adaptés à stocker la pluralité d'images de monture de lunettes virtuelle en reportant dans le plan de chaque image de monture virtuelle stockée ladite image de ladite seconde ligne horizontale de longueur prédéfinie (bdr), positionnée de sorte que ladite seconde ligne horizontale relie entre elles deux parties opposées de ladite monture virtuelle prévues pour embrasser le nez dudit visage et séparées par ladite longueur prédéfinie, et **en ce que** lesdits seconds moyens de traitement (36) sont adaptés à définir sur ladite première image dudit visage ladite première ligne horizontale (d) passant sensiblement par le centre des yeux dudit visage sur ladite première image et à superposer ladite image de monture virtuelle sélectionnée à ladite première image dudit visage de sorte que la distance qui sépare verticalement ladite première ligne horizontale définie sur ladite première image dudit visage et ladite seconde ligne horizontale reportée sur ladite image de monture virtuelle corresponde audit repère d'étalonnage (R) de la position verticale de ladite monture étalon sur ledit visage mesuré sur ladite seconde image.

11. Système selon l'une quelconque des revendications 8 à 10, **caractérisé en ce que** ladite monture étalon (50) chaussant ledit visage est équipée d'un moyen de calibration (51), lesdits premiers moyens de traitement (20) étant en outre adaptés, à partir de ladite seconde image (12) dudit visage chaussant ladite monture étalon équipée dudit moyen de calibration, à établir une échelle de référence et à mesurer, en utilisant ladite échelle de référence, des paramètres ophtalmiques dudit visage nécessaires au positionnement de verres correcteurs correspondants sur ladite monture virtuelle sélectionnée, lesdits premiers moyens de stockage (32) étant en outre adaptés à stocker parmi les informations relatives audit visage, lesdits paramètres ophtalmiques mesurés.

12. Système selon l'une quelconque des revendications 8 à 11, **caractérisé en ce que** lesdits premier et second moyens de stockage et lesdits seconds moyens de traitement (36) sont déportés dans un serveur (30).

13. Système selon la revendication 12, **caractérisé en ce qu'**il comprend un terminal d'affichage (40) relié audit serveur (30) par l'intermédiaire d'un réseau de communication, ledit terminal d'affichage étant adapté à afficher une représentation dudit visage chaussant ladite monture virtuelle sélectionnée.

## Patentansprüche

1. Verfahren zur Online-Auswahl eines virtuellen Brillen-Gestells aus einer Vielzahl von virtuellen Gestellen, wobei ein Bild erzeugt wird, das eine virtuelle Darstellung eines Gesichts, auf das ein ausgewähltes virtuelles Gestell aufgesetzt ist, zeigt, wobei das Bild durch eine Überlagerung eines Bilds des virtuellen Gestells und eines ersten Bild eines Gesichts ohne Gestell erstellt wird, die mit einem gleichen Maßstab abgebildet sind, um gleichzeitig auf einem Bildschirm angezeigt zu werden, um so die Darstellung des Gesichts mit dem aufgesetzten virtuellen Gestell zu erhalten, wobei das Verfahren **dadurch gekennzeichnet ist, dass** in dem gleichen Maßstab ein zweites Bild (12) des Gesichts mit einem aufgesetzten Standard-Gestell (50) abbildet wird, durch Verarbeitung des in dem Maßstab dargestellten zweiten Bildes eine Kalibriergröße (R) der vertikalen Position des Standard-Gestells (50) auf dem Gesicht bestimmt wird, und die Position des Bilds des virtuellen Gestells relativ zu dem ersten Bild des Gesichts in Abhängigkeit von der aus dem zweiten Bild des Gesichts bestimmten Kalibriergröße (R) ausgerichtet wird, wobei die Verarbeitung des zweiten Bilds (12) des Gesichts, auf welches das Standard-Gestell aufgesetzt ist, beinhaltet:
- Ziehen einer ersten horizontalen Linie (d) im Wesentlichen durch den Mittelpunkt der Augen (13, 14) des Gesichts,
- derart positioniertes Eintragen eines in dem Maßstab dargestellten Bilds einer zweiten horizontalen Linie mit einer vorgegebenen Länge (bdr) entsprechend einer Länge eines Standard-Stegs in die Ebene des zweiten Bilds, dass die zweite horizontale Linie (bdr) zwei gegenüberliegende Teile des die Nase des Gesichts überspannenden Standard-Gestells (50), welche durch die vorgegebene Länge beabstandet sind, miteinander verbindet,
- Messen in der Ebene des zweiten Bilds den Abstand, der die erste horizontale Linie und die zweite horizontale Linie in vertikaler Richtung trennt, wobei der gemessene Abstand die Kalibriergröße (R) der vertikalen Position des Standard-Gestells auf dem Gesicht darstellt.

2. Verfahren nach Anspruch 1, **dadurch gekennzeichnet, dass** es die Erfassung der Hornhautreflexionen der zwei Augen des Gesichts umfasst und dass die erste horizontale Linie (d) durch jede der Hornhautreflexionen führt.

3. Verfahren nach einem der Ansprüche 1 oder 2, **dadurch gekennzeichnet, dass**:
das Bild des virtuellen Gestells abgebildet wird, indem in die Ebene des Bildes des virtuellen Gestells das Bild der zweiten horizontalen Linie mit vorgegebener Länge (bdr) derart positioniert eingetragen wird, dass die zweite horizontale Linie (bdr) zwei vorgesehene gegenüberliegende Teile des virtuellen Gestells zum Überspannen der Nase des Gesichts, die durch die vorgegebene Länge beabstandet sind, miteinander verbindet,
in das erste Bild des Gesichts ohne Gestell die erste horizontale Linie (d) eingetragen wird, die im Wesentlichen durch den Mittelpunkt der Augen des Gesichts in dem ersten Bild führt,
das Bild des virtuellen Gestells und das erste Bild des Gesichts derart überlagert werden, dass der Abstand, der in vertikaler Richtung die in das erste Bild des Gesichts eingetragene erste horizontale Linie (d) und die in das Bild des virtuellen Gestells eingetragene zweite horizontale Linie trennt, der Kalibriergröße (R) der vertikalen Position des Standard-Gestells auf dem gemessenen Gesicht in dem zweiten Bild entspricht.

4. Verfahren nach einem der Ansprüche 1 bis 3, **dadurch gekennzeichnet, dass** die zweite horizontale Linie (bdr) angepasst ist, einen Längssteg mit einer aus den Längen von 16 mm, 18 mm oder 20 mm ausgewählten Länge zu modellieren.

5. Verfahren nach Anspruch 4, **dadurch gekennzeichnet, dass** die Bilder der abgebildeten virtuellen Gestelle klassifiziert sind in Abhängigkeit von der Länge des Längsstegs.

6. Verfahren nach einem der vorhergehenden Ansprüche, **dadurch gekennzeichnet, dass** das auf das Gesicht aufgesetzte Standard-Gestell (50) mit Kalibrierungsmitteln (51) ausgestattet wird, die es erlauben, ausgehend von dem zweiten Bild (12) einen Referenz-Maßstab zur Vornahme von Messungen zu errichten.

7. Verfahren nach Anspruch 6, **dadurch gekennzeichnet, dass** ausgehend von dem Referenz-Maßstab ophthalmische Parameter des Gesichts gemessen werden, die notwendig sind zur Positionierung von Korrekturgläsern entsprechend dem ausgewählten virtuellen Gestell.

8. System zur Auswahl von virtuellen Brillen-Gestellen, umfassend:
- Bilderfassungsmittel (10), die angepasst sind, ein erstes Bild eines Gesichts ohne Gestell und ein zweites Bild (12) des Gesichts mit einem aufgesetzten Standard-Gestell (50) zu liefern,
- mit den Bilderfassungsmitteln (10) verbundene erste Verarbeitungsmittel (20), die angepasst sind, die gelieferten Bilder auf einen gleichen Maßstab zu formatieren, wobei die ersten Verarbeitungsmittel (20) des weiteren angepasst sind, ausgehend von dem formatierten zweiten Bild eine Kalibriergröße (R) der vertikalen Position des Standard-Gestells auf dem Gesicht zu bestimmen,
- erste Speichermittel (32), die angepasst sind, das formatierte erste Bild des Gesichts und zumindest die Kalibriergröße (R) umfassende Relativinformationen zu dem Gesicht zu speichern,
- zweite Speichermittel (34), die angepasst sind, eine Vielzahl an Bildern von virtuellen Brillen-Gestellen in diesem Maßstab zu speichern , und
- zweite Verarbeitungsmittel (36), die angepasst sind, ein Bild eines aus den zweiten Speichermitteln (34) ausgewählten virtuellen Gestells dem ersten Bild des Gesichts unter Einstellung der Position des Bilds des ausgewählten virtuellen Gestells relativ zu dem ersten Bild des Gesichts in Abhängigkeit von der aus dem zweiten Bild des Gesichts bestimmten Kalibriergröße (R) zu überlagern,
wobei die ersten Verarbeitungsmittel (20) angepasst sind, eine erste horizontale Linie (d) zu definieren, die im Wesentlichen durch den Mittelpunkt der Augen (13, 14) des Gesichts führt, in die Ebene des zweiten Bilds ein in dem Maßstab dargestelltes Bild einer zweiten horizontalen Linie mit einer vorgegebenen Länge (bdr) entsprechend einer Länge eines Standard-Stegs derart positioniert einzutragen, dass die zweite horizontale Linie (bdr) die zwei gegenüberliegenden Teile des die Nase des Gesichts überspannenden Standard-Gestells, welche durch die vorgegebene Länge voneinander beabstandet sind, miteinander verbindet und in der Ebene des zweiten Bilds den Abstand zu messen, welcher in vertikaler Richtung die erste horizontale Linie und die zweite horizontale Linie trennt, wobei der gemessene Abstand die Kalibriergröße (R) der vertikalen Position des Standard-Gestells auf dem Gesicht festlegt.

9. System nach Anspruch 8, **dadurch gekennzeichnet, dass** es Bestimmungsmittel für die Hornhautreflektionen der zwei Augen des Gesichts umfasst und dass die ersten Verarbeitungsmittel (20) angepasst sind, die erste horizontale Linie (d) durch jede der Hornhautreflexionen zu führen.

10. System nach Anspruch 8 oder 9, **dadurch gekennzeichnet, dass** die zweiten Speichermittel (34) angepasst sind, eine Vielzahl an Bildern von virtuellen Brillen-Gestellen durch derart positioniertes Eintragen des Bilds der zweiten horizontalen Linie mit vorgegebener Länge (bdr) in die Ebene jedes gespeicherten Bilds des virtuellen Gestells zu speichern, dass die zweite horizontale Linie die zwei vorgesehenen gegenüberliegenden Teile des virtuellen Gestells zum Überspannen der Nase des Gesichts, welche durch die vorgegebene Länge voneinander beabstandet sind, miteinander verbunden sind, und dadurch, dass die zweiten Verarbeitungsmittel (36) angepasst sind, in dem ersten Bild des Gesichts die erste horizontale Linie (d), die im Wesentlichen durch den Mittelpunkt der Augen des Gesichts in dem ersten Bild führt, zu definieren und das Bild des ausgewählten virtuellen Gestells dem ersten Bild des Gesichts derart zu überlagern, dass der Abstand, der die in dem ersten Bild des Gesichts definierte erste horizontale Linie und die in das Bild des virtuellen Gestells eingetragene zweite horizontale Linie in vertikaler Richtung trennt, der Kalibriergröße (R) der vertikalen Position des Standard-Gestells auf dem gemessenen Gesicht in dem zweiten Bild entspricht.

11. System nach einem der Ansprüche 8 bis 10, **dadurch gekennzeichnet, dass** das auf das Gesicht aufgesetzte Standard-Gestell (50) mit Kalibrierungsmitteln (51) ausgestattet ist, wobei die ersten Verarbeitungsmittel (20) des Weiteren angepasst sind, ausgehend von dem zweiten Bild (12) des Gesichts mit dem aufgesetzten mit den Kalibrierungsmitteln ausgerüsteten Standard-Gestell einen Referenz-Maßstab zu bilden und unter Verwendung des Referenz-Maßstabs die bei der Positionierung von Korrekturgläsern entsprechend dem ausgewähltem virtuellen Gestell notwendigen ophthalmischen Parameter des Gesichts zu messen, wobei die ersten Speichermittel (32) des Weiteren angepasst sind, unter den Relativinformationen des Gesichts die gemessenen ophthalmischen Parameter zu speichern.

12. System nach einem der Ansprüche 8 bis 11, **dadurch gekennzeichnet, dass** die ersten und zweiten Speichermittel und die zweiten Verarbeitungsmittel (36) in einen Server (30) ausgelagert sind.

13. System nach Anspruch 12, **dadurch gekennzeichnet, dass** es ein mit dem Server (30) über ein Kommunikationsnetz verbundenes Anzeigeterminal (40) umfasst, wobei das Anzeigeterminal angepasst ist, eine Darstellung des Gesichts mit dem aufgesetzten ausgewählten virtuellen Gestell anzuzeigen.

## Claims

1. Method for the online selection of a virtual spectacle frame from among a plurality of virtual frames, of the type in which an image is generated forming a virtual representation of a face wearing a selected virtual frame, said image being formed by superimposing a virtual frame image on a first image of a face without a frame, both images being recorded on the same scale for simultaneous display on a screen so as to obtain said representation of said face wearing the virtual frame, said method being **characterised in that** a second image (12) of said face wearing a sample frame (50) is recorded on the same scale, a calibration reference point (R) of the vertical position of said sample frame (50) on said face is determined by processing said second image displayed at said scale, and the position of said virtual frame image is adjusted relative to said first image of said face in accordance with said calibration reference point (R) which has been determined from said second image of said face, the processing of said second image (12) of said face wearing said sample frame consisting of:
- plotting a first horizontal line (d) that passes substantially through the centre of the eyes (13, 14) of said face,
- projecting, in the plane of said second image, an image displayed at said scale of a second horizontal line of a predefined length (bdr) corresponding to a standard bridge length, positioned in such a way that said second horizontal line (bdr) interconnects two opposite portions of said sample frame (5) fitted over the nose of said face and separated by said predefined length,
- measuring, in said plane of said second image, the distance that vertically separates said first horizontal line from said second horizontal line, said measured distance forming said calibration reference point (R) of the vertical position of said sample frame on the face.

2. Method according to claim 1, **characterised in that** it consists in detecting corneal reflections from both eyes of said face and **in that** said first horizontal line (d) passes through each of said corneal reflections.

3. Method according to either claim 1 or claim 2, **characterised in that**:
said virtual frame image is recorded by projecting, in the plane of said virtual frame image, said image of said second horizontal line of predefined length (bdr), positioned in such a way that said second horizontal line (bdr) interconnects two opposite portions of said virtual frame which have been provided to fit over the nose of said face and are separated by said predefined length,
said first horizontal line (d) passing substantially through the centre of the eyes of said face on said first image is projected onto said first image of said face without a frame,
said virtual frame image is superimposed on said first image of said face in such a way that the distance that vertically separates said first horizontal line (d) projected onto said first image of said face from said second horizontal line projected onto said virtual frame image corresponds to said calibration reference point (R) of the vertical position of said sample frame on said face measured on said second image.

4. Method according to any one of claims 1 to 3, **characterised in that** said second horizontal line (bdr) is suitable for modelling a longitudinal bridge having a length selected from among lengths of 16 mm, 18 mm or 20 mm.

5. Method according to claim 4, **characterised in that** the recorded virtual frame images are classified according to the length of said longitudinal bridge.

6. Method according to any of the preceding claims, **characterised in that** said sample frame (5) worn on said face is equipped with a calibration means (51) for establishing from said second image (12) a reference scale for taking measurements.

7. Method according to claim 6, **characterised in that** the necessary ophthalmic parameters of said face for positioning corrective lenses corresponding to said selected virtual frame are measured from said reference scale.

8. System for selecting virtual spectacle frames, comprising:
- image acquisition means (10) suitable for providing a first image of a face without a frame and a second image (12) of said face wearing a sample frame (50),
- first processing means (20) connected to said image acquisition means (10), suitable for formatting said provided images on the same scale, said first processing means (20) also being suitable for determining from said second formatted image a calibration reference point (R) of the vertical position of said sample frame on said face,
- first storage means (32) suitable for storing said first formatted image of said face and information relating to said face comprising at least said calibration reference point (R),
- second storage means (34) suitable for storing a plurality of images of virtual spectacle frames on said scale, and
- second processing means (36) suitable for superimposing a virtual frame image selected from said second storage means (34) on said first image of said face by adjusting the position of said selected virtual frame image relative to said first image of said face in accordance with said calibration reference point (R) determined from said second image of said face,
- said first processing means (20) being suitable for defining a first horizontal line (d) that passes substantially through the centre of the eyes (13, 14) of said face, for projecting, in the plane of said second image, an image displayed on said scale of a second horizontal line of a predefined length (bdr) corresponding to a standard bridge length positioned in such a way that said second horizontal line (bdr) interconnects two opposite portions of said sample frame (50) fitted over the nose of said face and separated by said predefined length and for measuring, in the plane of said second image, the distance that vertically separates said first horizontal line from said second horizontal line, said measured distance forming said calibration reference point (R) of the vertical position of said sample frame on the face.

9. System according to claim 8, **characterised in that** it comprises means for determining corneal reflections from both eyes of said face and **in that** said first processing means (20) are suitable for plotting said first horizontal line (d) passing through each of said corneal reflections.

10. System according to either claim 8 or claim 9, **characterised in that** said second storage means (34) are suitable for storing the plurality of images of virtual spectacle frames by projecting, in the plane of each stored virtual frame image, said image of said second horizontal line of predefined length (bdr), positioned in such a way that said second horizontal line interconnects two opposite portions of said virtual frame provided to fit over the nose of said face and separated by said predefined length, and **in that** said second processing means (36) are suitable for defining on said first image of said face said first horizontal line (d) passing substantially through the centre of the eyes of said face on said first image and for superimposing said selected virtual frame image on said first image of said face in such a way that the distance that vertically separates said first horizontal line defined on said first image of said face from said second horizontal line which has been projected onto said virtual frame image corresponds to said calibration reference point (R) of the vertical position of said sample frame on said face measured on said second image.

11. System according to any of claims 8 to 10, **characterised in that** said sample frame (50) worn on said face is equipped with a calibration means (51), said first processing means (20) also being suitable for establishing, from said second image (12) of said face wearing said sample frame equipped with said calibration means, a reference scale and for measuring, using said reference scale, the necessary ophthalmic parameters of said face for positioning corresponding corrective lenses in said selected virtual frame, said first storage means (32) also being suitable for storing said measured ophthalmic parameters among the information relating to said face.

12. System according to any of claims 8 to 11, **characterised in that** said first and second storage means and said second processing means (36) are transferred to a server (30).

13. System according to claim 12, **characterised in that** it comprises a display terminal (40) connected to said server (30) via a communications network, said display terminal being suitable for displaying a representation of said face wearing said selected virtual frame.
